# EUROPÄISCHE PATENTANMELDUNG

(11) **EP 0 611 796 A1**
(43) Veröffentlichungstag der Anmeldung: **24.08.1994**
(21) Anmeldenummer: 94810073.0
(22) Anmeldetag: 09.02.1994
(51) Int. Cl.: C08K 3/22, C08L 63/00

(54) **Halogenfreie, hochgefüllte Epoxidharz-Giessmassen**

(30) Priorität: 18.02.1993 CH 508/93
(71) Anmelder: CIBA-GEIGY AG, CH-4002 Basel (CH)
(72) Erfinder: Baumann, Dieter, CH-4313 Möhlin (CH); Margotte, Werner, CH-4419 Lupsingen (CH)

(57) **Zusammenfassung**

Halogenfreie, hochgefüllte Epoxidharz-Giessmassen, enthaltend
(a) ein Epoxidharz mit mehr als einer 1,2-Epoxidgruppe im Molekül,
(b) ein Härtungsmittel für das Epoxidharz in für die Aushärtung des Epoxidharzes ausreichender Menge und
(c) als einzigen Füllstoff mehr als 50 Gewichts-%, bezogen auf die gesamte Epoxidharz-Giessmasse, Aluminiumhydroxid der Formel Al(OH)₃ mit einem Gehalt an totalem Na₂O von weniger als 0,10 Gewichts-%, bezogen auf das Al(OH)₃,
   sind gegenüber Feuchtigkeit weniger empfindlich und eignen sich zum Umhüllen von elektrischen oder elektronischen Bauteilen.

## Beschreibung

Die vorliegende Erfindung betrifft halogenfreie, hochgefüllte Epoxidharz-Giessmassen, die neben einem Epoxidharz und einem Härtungsmittel für das Epoxidharz als einzigen Füllstoff mehr als 50 Gewichts-%, bezogen auf die gesamte Epoxidharz-Giessmasse, Aluminiumhydroxid der Formel Al(OH)₃, entsprechend der Gleichung Al₂O₃·3 H₂O = 2 Al(OH)₃ oft auch als Aluminiumoxidtrihydrat bezeichnet, mit einem Gehalt an totalem Na₂O von kleiner als 0,10 Gewichts-%, bezogen auf das Al(OH)₃, enthalten und deren Verwendung zum Umhüllen von elektrischen oder elektronischen Bauteilen, vorzugsweise von Hochspannungsbauteilen.

Bei der Verwendung von Epoxidharzen als Giessharzmassen zum Umhüllen von vorzugsweise Hochspannungsbauteilen, wie Flybacktransformern für Fernsehgeräte oder beispielsweise Automobilzündspulen, ist es notwendig, dass sie neben einer guten Imprägnierfähigkeit und Flammhemmung auch eine hohe elektrische Durchschlagfestigkeit aufweisen, vorzugsweise bei und nach der Lagerung in der Feuchtigkeit.

Eine allgemein übliche Testmethode zur Beurteilung der eletrischen Durchschlagfestigkeit ist die in der IEC-Norm 243 beschriebene Methode, welche an Formkörpern vor und nach einer Feuchtigkeitslagerung vorgenommen wird.

Es ist bekannt, dass mit Quarz gefüllte Epoxidharz-Giessmassen eine hohe elektrische Durchschlagfestigkeit aufweisen. Solche Giessharzmassen sind aber nicht flammfest, so dass flammfestmachende Additive diesen Giessharzmassen zugesetzt werden müssen, welche das mechanische Eigenschaftsbild der gehärteten Giessharzmassen oft nachteilig verändern.

Aus der DE-OS 37 33 789 ist es bereits bekannt, eine halogenfreie, hochgefüllte Reaktionsharzmasse auf Basis bestimmter Diglycidylether, Isophorondiamin und Al(OH)₃ zum Umhüllen von elektrischen und elektronischen Bauteilen zu verwenden. Die mit den seinerzeit herkömmlichen Al(OH)₃-Produkten gefüllten Epoxidharz-Giessmassen sind aber gegenüber Feuchtigkeit empfindlich. Die aus solchen Epoxidharz-Giessmassen hergestellten Formkörper und Überzüge zeigen nach einer Feuchtigkeitslagerung einen grossen Leistungsabfall bei der elektrischen Durchschlagfestigkeit.

Es wurde nun überraschend gefunden, dass eine Abhängigkeit zwischen dem Abfall der Durchschlagfestigkeit nach der Feuchtigkeitslagerung und dem totalen Na₂O-Gehalt des Al(OH)₃ besteht, und dass man den oben genannten Nachteil vermeiden kann, wenn man als Füllstoff für Epoxidharz-Giessmassen ein Al(OH)₃ mit einem Gehalt an totalem Na₂O von kleiner als 0,10 Gewichts-%, bezogen auf das Al(OH)₃, verwendet.

Gegenstand vorliegender Erfindung sind somit halogenfreie, hochgefüllte Epoxidharz-Giessmassen, enthaltend
(a) ein Epoxidharz mit durchschnittlich mehr als einer 1,2-Epoxidgruppe im Molekül,
(b) ein Härtungsmittel für das Epoxidharz in für die Aushärtung des Epoxidharzes ausreichender Menge und
(c) als einzigen Füllstoff mehr als 50 Gewichts-%, bezogen auf die gesamte Epoxidharz-Giessmasse, Aluminiumhydroxid der Formel Al(OH)₃ mit einem Gehalt an totalem Na₂O von kleiner als 0,10 Gewichts-%, bezogen auf das Al(OH)₃.

Als Epoxidharze (a), die in den erfindungsgemässen Epoxidharz-Giessmassen eingesetzt werden können, eignen sich die in der Epoxidharztechnik üblichen Epoxidharze. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für solche Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen und Epichlorhydrin oder (β-Methylepichlorhydrin unter alkalischen Bedingungen, oder in Anwesenheit eines sauren Katalysators und anschliessende Alkalibehandlung.
   Die Glycidylether dieses Typs leiten sich beispielsweise von acyclischen Alkoholen ab, wie von Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen. Sie leiten sich aber auch beispielsweise von cycloaliphatischen Alkoholen, wie 1,4-Cyclohexandimethanol, Bis-(4-hydroxycyclohexyl)-methan oder 2,2-Bis-(4-hydroxycyclohexyl)-propan, ab oder sie besitzen aromatische Kerne, wie N,N-Bis-(2-hydroxyethyl)-anilin oder p,p'-Bis-(2-hydroxyethylamino)-diphenylmethan.
   Die Glycidylether können sich auch von einkerningen Phenolen ableiten, wie beispielsweise von Resorcin oder Hydrochinon, oder sie basieren auf mehrkernigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, wie solche der oben genannten Art.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan. Zu den Poly-(N-glycidyl)-verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether ableiten.
V) Cycloaliphatische Epoxidharze, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Bevorzugt verwendet man in den erfindungsgemässen Epoxidharz-Giessmassen als Epoxidharz (a) einen flüssigen oder viskosen Polyglycidylether oder -ester, insbesondere einen flüssigen oder viskosen Bisphenoldiglycidylether.

Die oben genannten Verbindung sind bekannt und zum Teil im Handel erhältlich. Es können auch Gemische von Epoxidharzen verwendet werden.

Als Härtungsmittel (b) können für die erfindungsgemässen Epoxidharz-Giessmassen die üblichen Härtungsmittel für Epoxidharze, wie beispielsweise Dicyandiamid, Polycarbonsäuren, Polycarbonsäureanhydride, Polyamine, Polyaminoamide, amingruppenhaltige Addukte aus Aminen und Polyepoxidverbindungen, Polyole sowie die katalytisch wirkenden Härtungsmittel verwendet werden.

Als Polycarbonsäuren für die Härtung der erfindungsgemässen Epoxidharz-Giessmassen eignen sich zum Beispiel aliphatische Polycarbonsäuren, wie Maleinsäure, Oxalsäure, Bernsteinsäure, Nonyl- oder Dodecylbernsteinsäure, Glutarsäure, Adipinsäure, Pimelinsäure, Korksäure, Azelainsäure oder dimerisierte bzw. trimerisierte Linolsäure, cycloaliphatische Polycarbonsäuren, wie beispielsweise Tetrahydrophthalsäure, Methylendomethylentetrahydrophthalsäure, Hexachlorendomethylentetrahydrophthalsäure, 4-Methyltetrahydrophthalsäure, Hexahydrophthalsäure oder 4-Methylhexahydrophthalsäure oder aromatische Polycarbonsäuren, wie beispielsweise Phthalsäure, Isophthalsäure, Terephthalsäure, Trimellitsäure, Pyromellitsäure oder Benzophenon-3,3',4,4'-tetracarbonsäure sowie die Anhydride der genannten Polycarbonsäuren.

Als Polyamine können für die Härtung aliphatische, cycloaliphatische, aromatische oder heterocyclische Amine eingesetzt werden, wie beispielsweise Ethylendiamin, Propan-1,2-diamin, Propan-1,3-diamin, N,N-Diethylethylendiamin, Hexamethylendiamin, Diethylentriamin, Triethylentetramin, Tetraethylenpentamin, N-(2-Hydroxyethyl)-, N-(2-Hydroxypropyl)- und N-(2-Cyanoethyl)-diethyltriamin, 2,2,4-Trimethylhexan-1,6-diamin, 2,3,3,-Trimethylhexan-1,6-diamin, N,N-Dimethyl- und N,N-Diethylpropan-1,3-diamin, Ethanolamin, m- und p-Phenylendiamin , Bis-(4-aminophenyl)-methan, Anilin-Formaldehyd-Harz, Bis-(4-aminophenyl)-sulfon, m-Xylylendiamin, Bis-(4-aminocyclohexyl)-methan, 2,2-Bis-(4-aminocyclohexyl)-propan, 2,2-Bis-(4-amino-3-methylcyclohexyl)-propan, 3-Aminomethyl-3,5,5-trimethylcyclohexylamin (Isophorondiamin) und N-(2-Aminoethyl)-piperazin sowie als Polyaminoamide beispielsweise solche aus aliphatischen Polyaminen und dimerisierten oder trimerisierten Fettsäuren.

Als Polyaminoamide eignen sich für die Härtung beispielsweise die durch Umsetzung von Polycarbonsäuren, vorzugsweise von dimerisierten Fettsäuren, mit Polyaminen im molaren Überschuss erhaltenen Reaktionsprodukte, wie sie beispielsweise im Handbook of Epoxy Resins, 1967, Seiten 10-2 bis 10-10 von H. Lee und K. Neville beschrieben werden.

Aminogruppenhaltige Addukte aus einem Amin und einer Polyepoxidverbindung als Härtungsmittel für Epoxidharze sind ebenfalls bekannt und können für die Härtung der erfindungsgemässen Epoxidharz-Giessmassen eingesetzt werden und werden beispielsweise durch Umsetzung von Epoxidharzen mit Polyaminen im äquivalenten Überschuss erhaltenen. Solche aminogruppenhaltige Addukte werden beispielsweise in den US-Patenten 3,538,184; 4,330,659; 4,500,582 und 4,540,750 näher beschrieben.

Als aliphatische Polyole für die Härtung der oben genannten Epoxidharz-Giessmassen eignen sich beispielsweise Ethylenglykol, Diethylenglykol und höhere Poly-(oxyethylen)-glykole, Propan-1,2-diol oder Poly-(oxypropylen)-glykole, Propan-1,3-diol, Butan-1,4-diol, Poly-(oxytetramethylen)-glykole, Pentan-1,5-diol, Hexan-1,6-diol, Hexan-2,4,6-triol, Glycerin, 1,1,1-Trimethylolpropan, Pentaerythrit oder Sorbit.

Als aromatische Polyole können für die Härtung der erfindungsgemässen Epoxidharz-Giessmassen beispielsweise einkernige Phenole, wie Resorcin, Hydrochinon, N,N-Bis-(2-hydroxyethyl)-anilin, oder mehrkernige Phenole, wie p,p'-Bis-(2-hydroxyethylamino)-diphenylmethan, Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie Novolake, erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder C₁-C₉-Alkylgruppen substituiert sind, wie beispielsweise 4-Chlorphenol, 2-Methylphenol, oder 4-tert.-Butylphenol oder durch Kondensation mit Bisphenolen, wie solche der oben genannten Art, eingesetzt werden.

Mit den genannten Epoxidharzhärtungsmitteln können auch geeignete Härtungsbeschleuniger eingesetzt werden. Beispielsweise können bei Verwendung von Dicyandiamid, Polyaminoamiden, Polycarbonsäuren und deren Anhydriden als Beschleuniger tertiäre Amine oder deren Salze, quaternäre Ammoniumverbindungen oder Alkalimetallalkoxide verwendet werden.

Es können auch katalytisch wirkende Härtungsmittel zur Härtung der erfindungsgemässen Epoxidharz-Giessmassen verwendet werden, wie tertiäre Amine, beispielsweise 2,4,6-Tris-(dimethylaminoethyl)-phenol und andere Mannichbasen, N-Benzyldimethylamin und Triethanolamin; Alkalimetallalkoxide von Alkoholen, beispielsweise Na-alkoholat von 2,4-Dihydroxy-3-hydroxymethylpentan; Zinnsalze von Alkansäuren, beispielsweise Zinnoctanoat; Friedel-Crafts-Katalysatoren, beispielsweise Bortrifluorid und seine Komplexe und Chelate, die durch Umsetzung von Bortrifluorid mit zum Beispiel 1,3-Diketonen erhalten werden, oder araliphatische Sulfoniumsalze des Hexafluoroantimonats oder Hexafluoroarsenats, beispielsweise Tribenzylsulfoniumhexafluoroantimonat oder Dibenzylphenylsulfoniumhexafluoroantimonat, wie sie beispielsweise in der EP-A-0 379 464 offenbart sind.

Vorzugsweise verwendet man als Härtungsmittel für die erfindungsgemässen Epoxidharz-Giessmassen ein Anhydrid einer Polycarbonsäure oder ein katalytisch härtendes Härtungsmittel, insbesondere ein katalytisch härtendes Härtungsmittel. Von den katalytisch härtenden Härtungsmitteln stellen die araliphatischen Sulfoniumsalze des Hexafluoroantimonats oder -arsenats bevorzugte Verbindungen dar.

Die Menge des eingesetzten Härtungsmittels richtet sich nach der chemischen Natur des Härtungsmittels und nach den gewünschten Eigenschaften der härtbaren Mischung und des gehärteten Produktes. Die maximale Menge kann leicht ermittelt werden. Wenn das Härtungsmittel ein Amin ist, werden normalerweise 0,75 bis 1,25 Äquivalente Aminwasserstoff pro 1 Epoxidäquivalent eingesetzt. Wenn Polycarbonsäuren oder ihre Anhydride eingesetzt werden, verwendet man gewöhnlich 0,4 bis 1,1 Äquivalente Carboxylgruppe bzw. Anhydridgruppe pro 1 Epoxidäquivalent. Bei der Verwendung von Polyphenolen als Härtungsmittel setzt man 0,75 bis 1,25 phenolische Hydroxylgruppen pro 1 Epoxidäquivalent ein. Katalytisch wirkende Härtungsmittel werden allgemein in Mengen von 0,1 bis 10 Gewichtsteilen pro 100 Gewichtsteile Epoxidharz eingesetzt.

Vorzugsweise verwendet man in den erfindungsgemässen Epoxidharz-Giessmassen ein Al(OH)₃ mit einem Gehalt an totalem Na₂O von kleiner als 0,04 Gewichts-%, insbesondere kleiner als 0,02 Gewichts-%, bezogen auf das Al(OH)₃.

Das erfindungsgemäss zu verwendende Al(OH)₃ mit einem Gehalt an totalem Na₂O von kleiner als 0,10 Gewichts-% kann beispielsweise durch eine gezielte Prozesssteuerung bei der Herstellung von Al(OH)₃ hergestellt werden. Al(OH)₃ mit einem einem Gehalt an totalem Na₂O von kleiner als 0,10 Gewichts-% ist nun auch im Handel erhältlich, beispielsweise unter der Bezeichnung Higilithe®HS 321 iA von Showa-Denko, JP, unter der Bezeichnung "CL 310" von der Sumitomo-Vertretung Chemag, DE, oder unter der Bezeichnung "Martinal VPK 9203" von Martinswerke, DE.

Die Herstellung der erfindungsgemässen Epoxidharz-Giessmassen kann in üblicher Weise durch Vermischen der Komponenten mit Hilfe bekannter Mischaggregate, beispielsweise mittels Rührer, Kneter oder Walzen, erfolgen.

Gegenstand der vorliegenden Erfindung ist weiterhin auch die Verwendung der erfindungsgemässen Epoxidharz-Giessmassen zum Umhüllen von elektrischen oder elektronischen Bauteilen, insbesondere zu Umhüllen von Hochspannungsbauteilen.

Die Härtung der erfindungsgemässen Epoxidharz-Giessmassen kann in an sich bekannter Weise ein- oder mehrstufig vorgenommen werden. Die Härtung erfolgt im allgemeinen durch Erhitzen der Epoxidharz-Giessmassen auf Temperaturen zwischen 80 und 200°C, insbesondere zwischen 90 und 160°C.

In den folgenden Beispielen stehen Teile für Gewichtsteile.

### Beispiele 1-3

37,36 Teile eines Epoxidharzgemisches aus 50 Teilen Bisphenol A-digylcidylether und 50 Teilen Bisphenol F-digylcidylether, 0,31 Teile γ-Glycidyloxypropyltrimethoxysilan und 0,05 Teile BYK®A 500 der Firma BYK Chemie, DE als Entlüfter werden vermischt. Zu je einer solchen Mischung werden 62,09 Teile eines Al(OH)₃ (Beispiel 1: Martinal VPK 9203 der Firma Martinswerke, DE; Beispiel 2: Higilithe ®HS 321 iA der Firma Showa-Denko, JP; Beispiel 3: CL 310 der Firma Sumitomo, Vertretung Chemac, DE) und 0,18 Teile des Antisedimentationsadditivs Bentone®SD-2 der Firma Kronos, DE zugegeben. Auf 100 Teile der gefüllten Epoxidharz-Giessmasse werden unter Rühren 3,8 Teile einer Polymerisationskatakysatorlösung, bestehend aus 3, 19 Teilen Dibutylphthalat und 0,61 Dibenzylphenylsulfomium-antimonhexafluorid, zugeben und das auf 55°-60°C erwärmte Gemisch wird anschliessend in auf 65°C erwärmte Formen gegossen. Die Härtung der Giessharzmischung erfolgt durch Temperaturerhöhung, 5°C/pro Minute, auf 120°C und wärend einer Stunde bei 125°C.

Die an den erhaltenen Formkörpern nach der EC-Norm 243, 3mm, 20 s bei 22°C gemessenen elektrischen Durchschlagsfestigkeitswerte sind in der folgenden Tabelle angegeben, desgleichen die nach 1-, 2- und 3-tägiger Lagerung der Formkörper im Dampfdrucktopf bei 121°C/1,2-1,5 bar gemessen Werte.

**Tabelle**

| Durchschlagfestigkeiten | | | | | | |
|---|---|---|---|---|---|---|
| Beispiel | Al(OH)₃ | Totaler Na₂O-Gehalt [%] | Durchschlagfestigkeit vor bzw. nach Feuchtigkeitslagerung (Tage) [kV/mm] | | | |
| | | | 0 | 1 | 2 | 3 Tage |
| 1 | Martinal VPK 9203 | 0,01 | 24,9 | 23,4 | 22,8 | 23,4 |
| 2 | Higilithe® HS 321 iA | 0,04 | 26,2 | 24,1 | 24,6 | 23,1 |
| 3 | CL 310 | 0,04 | 24,5 | 19,7 | 18,7 | 17,8 |

## Patentansprüche

1. Halogenfreie, hochgefüllte Epoxidharz-Giessmassen, enthaltend
(a) ein Epoxidharz mit mehr als einer 1,2-Epoxidgruppe im Molekül,
(b) ein Härtungsmittel für das Epoxidharz in für die Aushärtung des Epoxidharzes ausreichender Menge und
(c) als einzigen Füllstoff mehr als 50 Gewichts-%, bezogen auf die gesamte Epoxidharz-Giessmasse, Aluminiumhydroxid der Formel Al(OH)₃ mit einem Gehalt an totalem Na₂O von weniger als 0,10 Gewichts-%, bezogen auf das Al(OH)₃.

2. Epoxidharz-Giessmassen gemäss Anspruch 1, dadurch gekennzeichnet, dass sie als Epoxidharz (a) einen flüssigen oder viskosen Polyglycidylether oder -ester enthalten.

3. Epoxidharz-Giessmassen gemäss Anspruch 1, dadurch gekennzeichnet, dass sie als Epoxidharz (a) einen flüssigen oder viskosen Bisphenoldiglycidylether enthalten.

4. Epoxidharz-Giessmassen gemäss Anspruch 1, dadurch gekennzeichnet, dass sie als Härtungsmittel ein Anhydrid einer Polycarbonsäure oder katalytisch härtendes Härtungsmittel enthalten.

5. Epoxidharz-Giessmassen gemäss Anspruch 1, dadurch gekennzeichnet, dass sie als Härtungsmittel ein katalytisch härtendes Härtungsmittel enthalten.

6. Epoxidharz-Giessmassen gemäss Anspruch 5, dadurch gekennzeichnet, dass sie als katalytisch härtendes Härtungsmittel ein araliphatisches Sulfoniumsalz des Hexafluoroantimonats oder -arsenats enthalten.

7. Epoxidharz-Giessmassen gemäss Anspruch 1, dadurch gekennzeichnet, dass sie ein Al(OH)₃ mit einem Gehalt an totalem Na₂O von kleiner als 0,04 Gewichts-% enthalten.

8. Epoxidharz-Giessmassen gemäss Anspruch 1, dadurch gekennzeichnet, dass sie ein Al(OH)₃ mit einem Gehalt an totalem Na₂O von kleiner als 0,02 Gewichts-% enthalten.

9. Verwendung der Epoxidharz-Giessmassen gemäss Anspruch 1 zum Umhüllen von elektrischen oder elektronischen Bauteilen.

10. Verwendung der Epoxidharz-Giessmassen gemäss Anspruch 1 zum Umhüllen von Hochspannungsbauteilen.
